# EUROPÄISCHE PATENTANMELDUNG

(11) **EP 1 743 597 A1**
(43) Veröffentlichungstag der Anmeldung: **17.01.2007**
(21) Anmeldenummer: 06014816.0
(22) Anmeldetag: 17.07.2006
(51) Int. Cl.: A61C 13/00

(54) **Vorrichtung und Verfahren zur Herstellung von Keramikgrünkörpern**

(30) Priorität: 15.07.2005 DE 102005033140
(71) Anmelder: BEGO Bremer Goldschlägerei Wilh. Herbst GmbH & Co. KG, 28359 Bremen (DE)
(72) Erfinder: Lambrecht, Heinz, 28201 Bremen (DE)
(74) Vertreter: Birken, Lars

(57) **Zusammenfassung**

Die Erfindung betrifft eine Vorrichtung (1, 2, 3, 4) und ein Verfahren zur Herstellung von Keramikgrünkörpern (30) für dentale Formteile mit einem Schlickerbehälter (5, 35, 75, 135), wobei ein Formgeber (15) in Keramikschlicker (10) zur Beschichtung und zur Herstellung eines Keramikgrünkörpers (30) einbringbar ist, sowie ein Verfahren zur Herstellung von dentalen Formteilen. Um eine solche Vorrichtung (1, 2, 3, 4) und ein solches Verfahren anzugeben, die Nachteile der herkömmlichen Vorrichtungen und Verfahren vermeiden und auf einfache Weise ein kontrolliertes Entfernen des beschichteten Formstumpfes (15) aus dem Keramikschlickerbad erlauben, wird erfindungsgemäß vorgeschlagen, am Schlickerbehälter (5, 35, 75, 135) Leitungsmittel (20, 45, 85, 95) so anzuordnen, dass durch sie Keramikschlicker (10) kontrolliert aus dem Schlickerbehälter (5, 35, 75, 135) ableitbar ist.

## Beschreibung

Die Erfindung betrifft eine Vorrichtung und ein Verfahren zur Herstellung von Keramikgrünkörpern für dentale Formteile, sowie ein Verfahren zur Herstellung von dentalen Formteilen.

Es sind Verfahren zum Herstellen von Keramikgrünkörpern für dentale Formteile bekannt, bei denen ein Formstumpf eines Arbeitsmodells zur Beschichtung mit Keramikschlicker in einen einen solchen Schlicker enthaltenden Schlickerbehälter eingetaucht wird, beispielsweise aus DE 100 02 921 A1, DE 100 21 437 A1, DE 101 27 144 A1, DE 102 51 369 A1 und DE 104 34 437 A1.

Der Begriff "Beschichtung mit Keramikschlicker" bedeutet im Rahmen dieses Textes, dass das in Aufschlämmung in einem Suspensionsmittel, z.B. Wasser, enthaltene Keramikgrundmaterial, z.B. Keramikpulver, in fester Form als Beschichtung auf ein Substrat aufgebracht wird. Die daraus resultierende Beschichtung umfasst also Keramikgrundmaterial und gegebenenfalls Anteile an Suspensionsmittel. Diese Beschichtung stellt einen Keramikgrünkörper dar.

Das Aufbringen der Beschichtung kann beispielsweise durch eine lokale Destabilisierung des Schlickers, durch einen Flüssigkeitsentzug über das poröse Stumpfmaterial und/oder eine elektrophoretische Abscheidung erfolgen.

Um den Vorgang der Beschichtung zu verbessern, schlägt DE 100 21 437 A1 vor, zwischen (a) dem zu beschichtenden Stumpf und (b) dem Keramikschlicker bzw. dem den Keramikschlicker enthaltenden Schlickerbehälter eine Gleichspannung anzulegen, um eine elektrophoretische Abscheidung zu erreichen. Die Abscheiderate ist bei allen drei Verfahren nicht linear und nimmt mit zunehmender Schichtstärke ab. Die Schichtdicken für keramische Kronen liegen vorzugsweise im Bereich von 0,4 mm bis 1,0 mm und für Zwischenbrückenglieder im Bereich von 1,0 mm bis 4,0 mm. Die Schichtdicke wird hierbei durch eine geeignete Wahl der Beschichtungsparameter wie Zeit und/oder Spannung und/oder Stromstärke eingestellt.

Den bekannten Verfahren und den dabei verwendeten Vorrichtungen ist gemeinsam, dass der Formstumpf in den Keramikschlicker eingetaucht wird. Entweder wird hierbei der Formstumpf in den Schlickerbehälter hineinbewegt oder der Schlickerbehälter wird bewegt, um den Formstumpf aufzunehmen. Beim Entfernen aus dem Keramikschlickerbad tritt wiederum eine Relativbewegung zwischen Formstumpf und Schlickerbehälter auf.

Maßgeblich für eine gewünschte gleichmäßige Schichtstärke ist das Herausziehen des Formstumpfes aus dem Keramikschlicker. Wird der Formstumpf zu schnell aus dem Keramikschlicker herausgezogen, so kann der noch anhaftende Flüssigkeitsfilm abreißen. Die noch anhaftende Flüssigkeit sammelt sich dann als Tropfen an einem unteren Ende des Formstumpfes, was zu einer ungleichmäßigen Beschichtung führt. Wird der Formstumpf dagegen hinreichend langsam aus dem Schlicker entfernt, so bildet sich kein oder nur ein sehr kleiner Tropfen, was zu einer gleichmäßigeren Beschichtung führt.

Je höher die Viskosität und die Oberflächenspannung des Schlickers, desto langsamer sollte das Objekt in den Schlicker eingetaucht werden und wieder aus ihm entfernt werden. Die Grenzgeschwindigkeiten liegen hierbei üblicherweise zwischen 0,1 mm/s und 1 mm/s, wobei sich mit den bislang bekannten Verfahren und Vorrichtungen nur Geschwindigkeiten oberhalb von 0,27 mm/s einstellen ließen.

Bei einem zu schnellen Einbringen des Formstumpfes in das Keramikschlickerbad können sich nachteilige Auswirkungen auf die Beschichtung ergeben. Insbesondere können bei einem zu schnellen Eintauchen von Formstümpfen mit einer tiefen occlusalen Fossa (Grube), insbesondere bei Seitenzahnstümpfen, unerwünschte Lufteinschlüsse entstehen.

Die Schichtdicke oder Wandstärke der Beschichtung ergibt sich aus der Kombination von Abscheiderate und Verweildauer im Keramikschlickerbad, wobei das Einbringen in das Keramikschlickerbad und das Entfernen daraus zu berücksichtigen sind.

In der Praxis wird bislang zum Entfernen des beschichteten Formstumpfes aus dem Keramikschlickerbad eine automatische Linearführung verwendet. Eine solche automatische Linearführung ist jedoch aufwändig und empfindlich gegenüber Parameterveränderungen.

Die der vorliegenden Erfindung zugrunde liegende Aufgabe ist es daher, eine Vorrichtung und ein Verfahren vorzuschlagen, die die Nachteile der herkömmlichen Vorrichtungen bzw. Verfahren vermeiden und auf einfache Weise ein kontrolliertes Entfernen des beschichteten Formstumpfes oder eines anderen beschichteten Formgebers (z.B. einer beschichteten Metallfolie oder einer von innen beschichteten Außenform zur Herstellung eines Brückenzwischenglieds) aus dem Keramikschlickerbad erlauben.

Gelöst wird die Aufgabe erfindungsgemäß durch eine Vorrichtung zur Herstellung von Keramikgrünkörpern für dentale Formteile mit einem ersten Schlickerbehälter, wobei ein Formgeber (z.B. ein Formstumpf eines Arbeitsmodells oder ein Formgeber zur Herstellung eines Brückenzwischenglieds) in den Keramikschlicker zur Beschichtung mit Keramikschlicker zur Herstellung eines Keramikgrünkörpers einbringbar ist, die (a) Keramikschlicker im ersten Schlickerbehälter und/oder (b) Abscheidemittel für eine elektrophoretische Abscheidung umfasst, wobei (gemäß beider Alternativen a und b) am ersten Schlickerbehälter Leitungsmittel so angeordnet sind, dass durch sie Keramikschlicker kontrolliert aus dem ersten Schlickerbehälter ableitbar ist.

Die Aufgabe wird ebenfalls durch ein Verfahren zum Herstellen von Keramikgrünkörpern für dentale Formteile gelöst, das die folgenden Schritte aufweist:
- Einlassen eines Keramikschlickerbades in einen ersten Schlickerbehälter einer erfindungsgemäßen Vorrichtung,
- Eintauchen eines Formgebers (z.B. wie oben angegeben) in das Keramikschlickerbad im ersten Schlickerbehälter,
- Beschichten des Formgebers mit Keramikschlicker im Keramikschlickerbad, so dass ein Keramikgrünkörper entsteht, und
- Entfernen des Formgebers mit dem Keramikgrünkörper aus dem Keramikschlickerbad,
   wobei Keramikschlicker zur Entfernung des Formgebers aus dem Keramikschlickerbad kontrolliert aus dem ersten Schlickerbehälter abgeleitet wird.

Der Erfindung liegt die Erkenntnis zugrunde, dass es möglich ist, den Formgeber (z.B. Formstumpf) aus dem Keramikschlickerbad zu entfernen, ohne den Formgeber oder die den Keramikschlicker enthaltende Vorrichtung zu bewegen, indem der die Oberfläche des Keramikschlickerbades (der Schlickerspiegel) kontrolliert abgesenkt wird. Statt wie bisher die mit dem Entfernen eines beschichteten Formstumpfes verbundene relative Bewegung dadurch zu bewirken, dass der Formstumpf relativ zur Vorrichtung bewegt wird (in Relation zu der der Schlickerspiegel sich nach der bisherigen Vorgehensweise im wesentlichen nicht verändert), können Formstumpf (oder ein anderer Formgeber) und Vorrichtung relativ zueinander ihre Position beibehalten, wenn der Schlickerspiegel durch kontrolliertes Ablassen von Keramikschlicker in Bezug auf die Vorrichtung und damit den Formstumpf sinkt. Die Steuerung des Ablassens und die Kontrolle der Geschwindigkeit, mit der der Schlickerspiegel sinkt, können mit Mitteln erreicht werden, die einfacher sind als die, die bislang in der Praxis zur Steuerung des Entfernens eines beschichteten Formstumpfes verwendet werden. Der mit Keramikschlicker befüllte erste Schlickerbehälter wird durch geeignete Mittel zur Entleerung zeitlich definiert entleert, wobei je nach Entleerungsgeschwindigkeit, die sich z.B. aus der Viskosität des Keramikschlickers und der Öffnungsgröße der Ableitung ergibt, unterschiedliche Schichtdicken erreicht werden können, wobei eine ungewollte Tropfenbildung vermieden wird.

In einer bevorzugten Ausgestaltung der erfindungsgemäßen Vorrichtung sind die Leitungsmittel als eine Ablassöffnung zum Ableiten von Keramikschlicker im unteren Bereich des ersten Schlickerbehälters ausgestaltet oder umfassen eine solche Ablassöffnung. Infolge der Schwerkraft fließt Keramikschlicker auf einfache Weise aus dem ersten Schlickerbehälter ab. Es sind keine zusätzlichen Mittel wie etwa eine Pumpe nötig, nur die Ablassöffnung selbst muss, z.B. in ihrer Größe, gesteuert werden, um ein kontrolliertes Ableiten zu erreichen. Die Größe der Ablassöffnung liegt vorzugsweise in einem Bereich, der der Größe eines Kreises mit einem Durchmesser im Bereich von 1 bis 10 mm, vorzugsweise im Bereich von 2 bis 4 mm, entspricht. Von einer Kreisform abweichende Formen der Ablassöffnung sind möglich, die Kreisform ist jedoch bevorzugt. Die Größe der Ablassöffnung und die Viskosität des Schlickers bedingen gemeinsam die Durchflussrate, so dass beide Größen zueinander geeignet eingestellt werdensollten.

Hierzu eignen sich in besonders einfacher Weise ein mechanischer Schieber oder ein Quetschventil, mit denen die Ablassöffnung des ersten Schlickerbehälters zum kontrollierten Ablassen von Keramikschicker aus dem ersten Schlickerbehälter verschließbar ist.

In einer vorteilhaften Ausgestaltung umfasst die erfindungsgemäße Vorrichtung einem zweiten Schlickerbehälter, in den Keramikschlicker durch die Leitungsmittel aus dem ersten Schlickerbehälter kontrolliert einleitbar ist. Durch das Auffangen des abgeleiteten Keramikschlickers verbleibt dieser in der Vorrichtung und kann zu einem späteren Zeitpunkt wiederverwendet werden. Hierbei sind vorteilhafterweise alle Innenräume des ersten und des zweiten Schlickerbehälters durch die Ablassöffnung miteinander verbunden und durch Mittel zum Schließen der Ablassöffnung voneinander trennbar.

Gemäß einer weiteren Ausgestaltung sind eine oder mehrere Öffnungen an einer von der Ablassöffnung entfernten Stelle in dem ersten und/oder dem zweiten Schlickerbehälter vorgesehen, sowie Verschlussdeckel, um die Öffnung(en) lösbar dicht zu verschließen. Durch eine Öffnung besteht die Möglichkeit, in den Innenraum eines Schlickerbehälters einzudringen, beispielsweise für Reparaturen oder zur Reinigung, während die Verschlussdeckel zumindest im Betrieb ein ungewolltes Austreten von Keramikschlicker verhindern.

Vorteilhafterweise umfassen die Leitungsmittel zusätzliche Einleitungsmittel, durch die Keramikschlicker aus dem zweiten in den ersten Schlickerbehälter einleitbar ist. Damit ist es möglich, Keramikschlicker, der aus dem ersten Schlickerbehälter in den zweiten abgeleitet wurde, wieder in den ersten zurückzuleiten.

Gemäß einer weiteren bevorzugten Ausgestaltung der erfindungsgemäßen Vorrichtung sind der erste und zweite Schlickerbehälter im wesentlichen baugleich ausgestaltet und können durch eine Drehung um eine horizontale Achse ihre Position tauschen. Wurde Keramikschlicker aus dem ersten Schlickerbehälter in den zweiten abgeleitet, so kann bei dieser Ausgestaltung die Vorrichtung auf den Kopf gestellt werden, wobei der erste und der zweite Schlickerbehälter die Positionen und die Funktionen tauschen. Hiermit kann die für ein Zurückleiten von Keramikschlicker aus dem zweiten Schlickerbehälter in den ersten nötige Zeit eingespart und auf zusätzliche Mittel zum Zurückleiten von Keramikschlicker aus dem zweiten in den ersten Schlickerbehälter verzichtet werden.

Zusätzlich können der zweite Schlickerbehälter und/oder der Verschlussdeckel des zweiten Schlickerbehälters ein Rührmittel zum Rühren von Keramikschlicker aufweisen, wodurch eine ungewollte Trennung von Keramikgrundmaterial und Suspensionsmittel vermieden werden kann.

Ebenso können der erste Schlickerbehälter und/oder der Verschlussdeckel des ersten Schlickerbehälters Befestigungsmittel zur lösbaren Befestigung des Formgebers (z.B. Formstumpfes) aufweisen. Da eine relative Bewegung zwischen Vorrichtung und Formgeber erfindungsgemäß während der Beschichtung und zum Entfernen des Formgebers aus dem Keramikschlickerbad nicht notwendig ist, ist vorzugsweise eine geeignete Halterung für den Formgeber im ersten Schlickerbehälter oder an dessen Verschlussdeckel vorgesehen. Somit kann der Formgeber zeitweise an einer vorgegebenen Position im Innenraum des Schlickerbehälters und damit im Keramikschlickerbad befestigt werden.

In einer weiteren Ausgestaltung der Vorrichtung verjüngt sich der Innenraum des ersten Schlickerbehälters zur Ablassöffnung hin. Mit einem sich demnach zur Ablassöffnung hin verkleinernden Querschnitt kann es erreicht werden, dass die Geschwindigkeit, mit der der Schlickerspiegel sinkt, auch bei einer verringerten Füllhöhe des Keramikschlickers im ersten Schlickerbehälter im wesentlichen konstant gehalten werden kann.

In einer weiteren Ausgestaltung der Vorrichtung weist diese einen dritten Schlickerbehälter auf, wobei am dritten Schlickerbehälter Leitungsmittel so angeordnet sind, dass durch sie Keramikschlicker kontrolliert aus dem dritten Schlickerbehälter in den ersten Schlickerbehälter einleitbar ist. Durch das kontrollierte Einleiten von Keramikschlicker aus dem dritten in den ersten Schlickerbehälter wird erreicht, dass nicht nur das Entfernen aus dem Keramikschlickerbad mit einer gewünschten, vorbestimmten Geschwindigkeit abläuft, sondern auch das Einbringen in das Keramikschlickerbad, ohne dass der Formgeber (z.B. Formstumpf) relativ zu der Vorrichtung bewegt werden müsste.

Bei einer vorteilhaften Ausgestaltung der erfindungsgemäßen Verfahrens ist vorgesehen, dass das Beschichten erfolgt durch (i) elektrophoretische Abscheidung, (ii) Destabilisierung von Keramikschlicker, und/oder (iii) im Falle eines porösen Formstumpfes oder einer porösen Außenform Entziehung der Flüssigphase aus dem Keramikschlicker aufgrund der Porosität. Durch derartige Verfahrensgestaltungen kann das Beschichten beschleunigt werden, was zu kürzeren Bearbeitungszeiten führt, ohne dass die Qualität der Beschichtung und damit des hergestellten Keramikgrünkörpers darunter leitet.

Bevorzugt wird der Formgeber zur Destabilisierung des Keramikschlickers vor dem Eintauchen in das Keramikschlickerbad mit einem Elektrolyten beschichtet. Hierbei werden als Elektrolytbeschichtung Salze, bestimmte Tenside oder pH-Wert verändernde Substanzen eingesetzt, wobei Salze bevorzugt werden.

Ein erfindungsgemäßes Verfahren zur Herstellung eines dentalen Formteils, insbesondere eines Inlays, einer Krone, einer Brücke oder eines Implantatgerüsts, umfasst die Schritte:
- Herstellen eines Formgebers (z.B. wie oben angegeben),
- Herstellen eines Keramikgrünkörpers auf dem Formgeber gemäß einem erfindungsgemäßen Verfahren,
- Herstellen des dentalen Formteils aus dem Keramikgrünkörper.

Im erfindungsgemäßen Verfahren wird der Keramikgrünkörper auf einfache und preiswerte Weise hergestellt, wobei nach der Herstellung des Keramikgrünkörpers durch die Beschichtung des Formgebers üblicherweise der Grünkörper vom Formgeber getrennt wird, sofern es sich um einen Formstumpf oder eine Außenform handelt, bevor das dentale Formteil aus ihm hergestellt wird, etwa durch Sintern, gegebenenfalls verbunden mit Glasinfiltieren.

Im folgenden wird die Erfindung anhand von vorteilhaften Ausführungsformen mit Bezug auf die Figuren näher erläutert. Dabei zeigen:

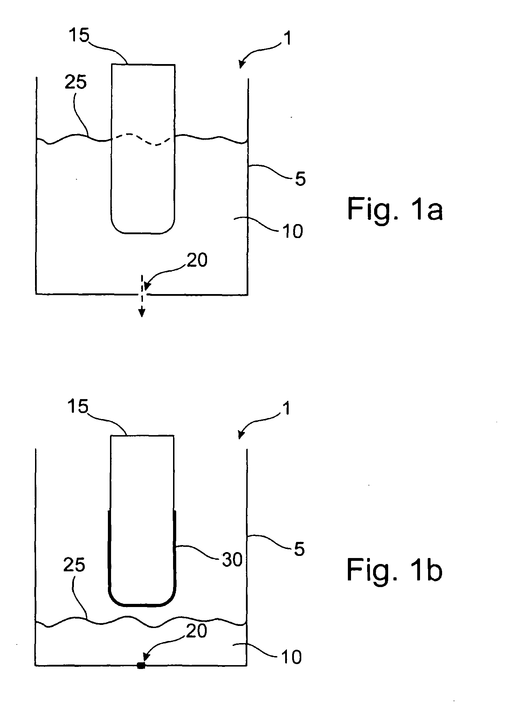

- Fig. 1 a: eine schematische Querschnittsansicht einer ersten Ausführungsform der erfindungsgemäßen Vorrichtung vor dem Ableiten von Keramikschlicker,
- Fig. 1 b: eine schematische Querschnittsansicht der ersten Ausführungsform aus Fig. 1 a nach dem Ableiten von Keramikschlicker,
- Fig. 2: eine schematische Querschnittsansicht einer zweiten Ausführungsform der erfindungsgemäßen Vorrichtung,
- Fig. 3: eine schematische Querschnittsansicht einer dritten Ausführungsform der erfindungsgemäßen Vorrichtung,
- Fig. 4a: eine schematische Seitenansicht einer vierten Ausführungsform der erfindungsgemäßen Vorrichtung und
- Fig. 4b: eine schematische Querschnittsansicht der in Fig. 4a gezeigten vierten Ausführungsform.

Fig. 1 a zeigt eine schematische Querschnittsansicht einer ersten Ausführungsform der erfindungsgemäßen Vorrichtung 1 vor dem Ableiten von in einem ersten Schlickerbehälter 10 befindlichen Keramikschlicker 10. In das von dem Keramikschlicker 10 gebildete Keramikschlickerbad ist ein Formstumpf 15 als Beispiel eines Formgebers eingetaucht. Der erste Schlickerbehälter 10 weist in seinem unteren Bereich Leitungsmittel in Form einer Ablassöffnung 20 auf, durch die Keramikschlicker kontrolliert aus dem ersten Schlickerbehälter 10 ableitbar ist. Die Ablassöffnung 20 ist hier geöffnet dargestellt, wobei Keramikschlicker aus dem ersten Schlickerbehälter abfließen kann, wodurch der Schlickerspiegel 25 in Relation zum ersten Schlickerbehälter fällt. Solange ein Teil des Formstumpfes 15 sich im Keramikschlickerbad befindet, wird sich daran Keramikgrundmaterial aus dem Keramikschlicker 10 ablagern. Eine Möglichkeit, eine derartige Beschichtung zu fördern, liegt darin, das Material des Formstumpfes 15 derart porös auszubilden (nicht gezeigt), dass das Suspensionsmittel des Keramikschlickers 10 vom Formstumpf 15 aufgenommen wird, wobei das Keramikgrundmaterial an der Außenseite des Formstumpfes 15 verbleibt. Der Formstumpf 15 kann alternativ auch mit einem Destabilisierungsmittel (nicht gezeigt) versehen sein, etwa einem Elektrolyt-Material, durch das der Keramikschlicker 10 destabilisiert wird, also eine Trennung von Suspensionsmittel und Keramikgrundmaterial erfährt, wobei sich das Keramikgrundmaterial am Formstumpf abscheidet. Der Formstumpf besteht aus einem ausgießbaren Material, vorzugsweise Gips.

Fig. 1 b zeigt eine schematische Querschnittsansicht der ersten Ausführungsform aus Fig. 1 a nach dem Ableiten von Keramikschlicker 10. Aus der Vorrichtung 1 bzw. aus dem ersten Schlickerbehälter 5 wurde ausgehend von der in Fig. 1 a dargestellten Situation Keramikschlicker 10 abgelassen, so dass der Schlickerspiegel 25 derart abgesunken ist, dass sich der Formstumpf 15 nicht mehr im Keramikschlickerbad befindet. Die Ablassöffnung 20 ist hier verschlossen dargestellt, so dass kein weiterer Keramikschlicker 10 durch sie aus dem ersten Schlickerbehälter 5 abgeleitet wird. Auf der Oberfläche des Formstumpfes 15 wurde während der Verweilzeit im Keramikschlickerbad eine Beschichtung 30 aufgebracht, die aus dem Keramikschlicker 10 abgeschiedenes Keramikgrundmaterial enthält. Zudem kann die Beschichtung 30 noch einen Anteil von im Keramikschlicker 10 verwendeten Suspensionsmittel enthalten. Die Beschichtung 30 stellt somit einen Keramikgrünkörper 30 dar, der in bekannter Weise zu einem dentalen Formteil weiterverarbeitet werden kann, etwa durch Sinterung, gegebenenfalls gefolgt von einer Glasinfiltration und einem eventuellen Verblenden. Hierbei kann vorgesehen sein, den Keramikgrünkörper vor der Weiterverarbeitung in geeigneter, bekannter Weise vom Formstumpf 15 zu trennen, dies erst nach einem oder mehreren Verarbeitungsschritten zu tun oder auch den Formstumpf 15 im Keramikmaterial zu belassen.

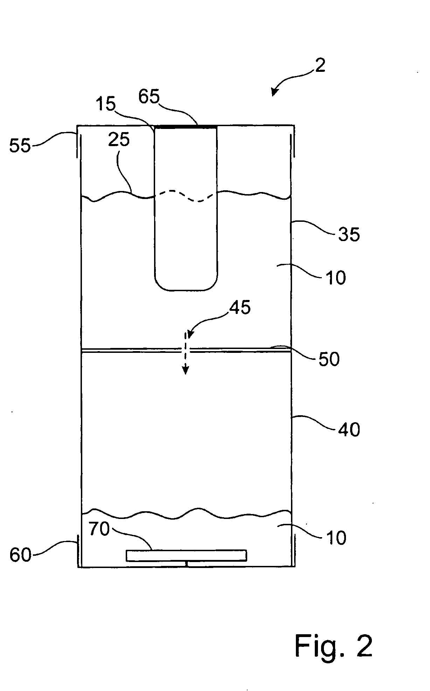

Fig. 2 zeigt eine schematische Querschnittsansicht einer zweiten Ausführungsform der erfindungsgemäßen Vorrichtung 2. Die Vorrichtung 2 weist einen ersten Schlickerbehälter 35 auf, dessen Innenraum über ein Leitungsmittel in Form einer Ablassöffnung 45 in seinem unteren Bereich mit dem Innenraum eines zweiten Schlickerbehälters 40 verbunden ist, der unter dem ersten Schlickerbehälter 35 angeordnet ist. In der Vorrichtung 2 befindet sich Keramikschlicker 10. In der hier dargestellten Ausführungsform weisen die Schlickerbehälter 35, 40 eine gemeinsame Wandung 50 auf, in der die Ablassöffnung 45 mit geeigneten Mitteln (nicht gezeigt) zur Steuerung der Ablassöffnung, etwa einem Quetschventil oder einem Schieber, angeordnet ist. Der erste Schlickerbehälter 35 weist einen Verschlussdeckel 55 an einer der Ablassöffnung 45 gegenüberliegenden Seite, hier in seinem oberen Bereich, auf. Auch der zweite Schlickerbehälter 40 weist an einer von der Ablassöffnung 45 abgewandten Seite einen Verschlussdeckel 60 auf. Die Schlickerbehälter 35, 40 und die Verschlussdeckel 55, 60 sind derart ausgelegt, dass die Schlickerbehälter 35, 40 durch die Verschlussdeckel 55, 60 zumindest im Betriebszustand so verschlossen werden können, dass kein Keramikschlicker 10 ungewollt austreten kann. Der Verschlussdeckel 55 des ersten Schlickerbehälters 35 besitzt Befestigungsmittel 65 zur Befestigung eines mit Keramikmaterial zu beschichtenden Formstumpfes 15 (als Beispiel eines Formgebers). Der Formstumpf 15 ist so befestigt, dass er zumindest in Teilen unter einen Schlickerspiegel 25 des Keramikschlickerbades in den Keramikschlicker 10 zur Beschichtung mit Keramikmaterial reichen kann. In der dargestellten Ausführungsform ist der Formstumpf durch eine Knetmasse als Befestigungsmittel 65 am Verschlussdeckel 55 befestigt. Eine Vielzahl von anderen Befestigungsalternativen ist möglich. Beispielsweise kann der Formstumpf, wenn er geeignete Mittel, etwa Pins, aufweist, auch durch Schraubklemmen befestigt werden. Außerdem kann statt der Knetmasse ein geeignetes Adhäsivmaterial verwandt werden. Der Verschlussdeckel 60 des zweiten Schlickerbehälters 40 ist mit einem Rührmittel 70 versehen. Für das Rührmittel 70 stehen ebenfalls eine Reihe bekannter Alternativen zur Verfügung, beispielsweise kann das Rührmittel 70 als Magnetrührer ausgestaltet sein.

Der am Verschlussdeckel 55 befestigte Formstumpf 15 wird in das Keramikschlickerbad eingebracht, so dass eine Beschichtung mit Keramikgrundmaterial ähnlich zur oben beschriebenen ersten Ausführungsform erreicht werden kann. Durch die Ablassöffnung 45 wird Keramikschlicker 10 aus dem ersten Schlickerbehälter 35 in den zweiten Schlickerbehälter 40 abgeleitet, wobei das Ableiten so gesteuert wird, dass der Schlickerspiegel 25 des Keramikschlickers 10 im ersten Schlickerbehälter 35 mit einer gewünschten Geschwindigkeit absinkt und somit der Formstumpf 15 aus dem Keramikschlickerbad entfernt wird. Anders ausgedrückt wird das Keramikschlickerbad vom Formstumpf 15 entfernt. Der in den zweiten Schlickerbehälter 40 abgeleitete Keramikschlicker 10 wird mittels des Rührmittels gerührt, was verhindern soll, dass sich der Keramikschlicker 10 ungewollt in Suspensionsmittel und Keramikgrundmaterial trennt.

Beim Einleiten von Keramikschlicker 10 in den zweiten Schlickerbehälter 40 wird Luft aus dem zweiten Schlickerbhälter 40 verdrängt. Es kann hierzu vorgesehen sein, dass der zweite Schlickerbehälter 40 Mittel umfasst, durch die die verdrängte Luft abgelassen werden kann, damit verhindert wird, dass z.B. Luftblasen durch die Ablassöffnung 45 in den ersten Schlickerbehälter eintreten. Wenn der erste Schlickerbehälter 35 durch den Verschlussdeckel 55 derart verschlossen ist, dass in den Bereich oberhalb des Schlickerspiegels 25 keine Luft oder ähnliches gelangen kann, bildet sich infolge des Absinkens des Schlickerspiegels 25 ein Unterdruck aus, der ungewollte Auswirkungen auf die Absinkrate haben kann. Um einen solchen Unterdruck zu vermeiden, kann beispielsweise vorgesehen sein, dass der Verschlussdeckel 55 den ersten Schlickerbehälter 35 nicht luftdicht abschließt oder dass der erste Schlickerbehälter 35 andere geeignete Mittel zum Druckausgleich aufweist. Es kann hierbei auch vorgesehen sein, dass die aus dem zweiten Schlickerbehälter 60 verdrängte Luft oberhalb des Schlickerspiegels 25 in den ersten Schlickerbehälter 35 eingeleitet wird.

Sind erster und zweiter Schlickerbehälter 35, 40 und die zugehörigen Verschlussdeckel 55, 60 im wesentlichen baugleich ausgeführt, so können sie durch eine Drehung um eine horizontale Achse ihre Positionen tauschen und dann jeweils die Funktion des anderen erfüllen. Es kann auch vorgesehen sein, dass der Verschlussdeckel 55 des ersten Schlickerbehälters 35 vor dem Drehen durch ein weiteres Exemplar des Verschlussdeckels 60 des zweiten Schlickerbehälters 40 ersetzt wird und dass nach dem Drehen der Verschlussdeckel 55 auf den zweiten Schlickerbehälter gesetzt wird, der sich dann im oberen Bereich der Vorrichtung befindet. Hierbei kann darauf verzichtet werden, dass beide Verschlussdeckel sowohl Befestigungsmittel als auch Rührmittel aufweisen.

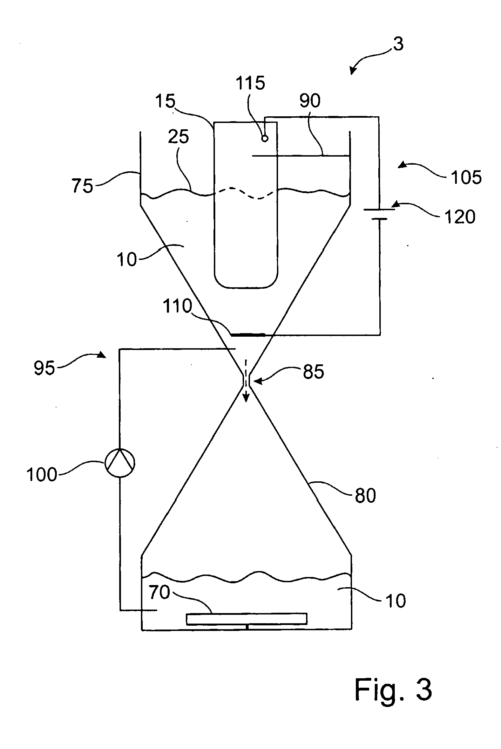

Die in Fig. 3 gezeigte Ausführungsform einer erfindungsgemäßen Vorrichtung 3 ähnelt der in Fig. 2 gezeigten Ausführungsform. Die Innenräume eines ersten und eines zweiten Schlickerbehälters 75 bzw. 80 sind durch eine Auslassöffnung 85 verbunden, durch die Keramikschlicker 10 aus dem ersten, oberen Schlickerbehälter 75 in den zweiten, unteren Schlickerbehälter 80 einleitbar ist. Die beiden Schlickerbehälter 75, 80 weisen hier keine gemeinsame Wandung auf, da sich jeweils ihr Innenraum zur der zwischen Ihnen angeordneten Auslassöffnung 85 hin verjüngt. Die Form ähnelt einer Sanduhr. Durch eine geeignete Verjüngung des Innenraums des ersten Schlickerbehälters 75 kann erreicht werden, dass die Ableitgeschwindigkeit durch die Ablassöffnung 85 auch bei einem sinkenden Schlickerspiegel 25 ohne eine spezielle Steuerung der Ablassöffnung 85 so bestimmt wird, dass der Schlickerspiegel 25 mit einer im wesentlichen konstanten Rate absinkt. Für den ersten Schlickerbehälter 75 ist hier kein Verschlussdeckel vorgesehen, wobei der Formstumpf (als Beispiel für einen Formgeber) mit an dem ersten Schlickerbehälter 75 angebrachte Befestigungsmittel 90 gehalten wird. Auch der zweite Schlickerbehälter 80 weist keinen Verschlussdeckel auf, der Behälter ist insofern selbst geschlossen. Ähnlich zur in Fig. 2 gezeigten Ausführungsform sind Rührmittel 70 vorgesehen.

Wenn nicht vorgesehen ist, dass der erste und der zweite Schlickerbehälter austauschbar sind, so kann auch darauf verzichtet werden, dass sich der Innenraum des zweiten Schlickerbehälters 80 zur Ablassöffnung 85 hin verjüngt.

Die erfindungsgemäße Vorrichtung 3 weist Einleitungsmittel 95 auf, die im unteren Bereich des zweiten Schlickerbehälters 80 mit dessen Innenraum in Kontakt stehen und auf ähnliche Weise mit dem Innenraum des ersten Schlickerbehälters 75 in Verbindung stehen. Durch die Einleitungsmittel 95 kann Keramikschlicker 10 aus dem zweiten Schlickerbehälter 80 in den ersten Schlickerbehälter 75 eingeleitet werden. Wurde nach bzw. während des Beschichtungsvorgangs Keramikschlicker 10 aus dem ersten Schlickerbehälter 75 in den zweiten Schlickerbehälter 80 abgeleitet, so kann durch die Einleitungsmittel 95 Keramikschlicker 10 wieder in den ersten Schlickerbehälter eingeleitet werden, so dass der Vorgang von neuem beginnen kann. Um den Höhenunterschied zu überwinden, ist in den Einleitungsmitteln 95 eine Pumpe 100 vorgesehen.

In einer alternativen Ausgestaltung (nicht gezeigt) dienen die Einleitungsmittel 95 dazu, kontrolliert Keramikschlicker aus dem ersten Schlickerbehälter abzuleiten, wobei auf eine gesonderte Ablassöffnung (85) verzichtet werden kann.

Weiterhin besitzt die in Fig. 3 gezeigte Vorrichtung 3 Abscheidemittel 105. Eine Elektrode 110 der Abscheidemittel 105 ist im Keramikschlickerbad, also im direkten Kontakt mit dem Keramikschlicker 10, angeordnet, während eine zweite Elektrode 115 mit dem Formstumpf 15, nämlich dessen leitender oder leitend gemachter Oberfläche, kontaktiert. Durch eine in den Abscheidemitteln 105 vorgesehene Gleichspannungsquelle 120 wird eine Gleichspannung zwischen den Elektroden 110, 115 erzeugt. Hierbei ist der Formstumpf 15 im gezeigten Ausführungsbeispiel mit dem Plus-Pol der Spannungsquelle 120 verbunden, während die Elektrode 110 und damit der Keramikschlicker 10 negatives Potential erhalten. Die Polung kann auch umgekehrt gewählt werden, abhängig von der Ladung der im Keramikschlicker enthaltenen Partikel. Das Anlegen einer Spannung zwischen Formstumpf 15 und Keramikschlicker 10 erlaubt eine elektrophoretische Abscheidung von Keramikmaterial auf dem Formstumpf, wodurch höhere Abscheideraten erreicht werden können. Weitere Details zur elektrophoretischen Abscheidung aus dem Keramikschlicker können beispielsweise den Offenlegungsschriften DE 100 21 437 A1, DE 102 51 369 A1 und DE 103 34 437 A1 entnommen werden.

Zusätzlich können die Abscheidemittel 105 eine Steuerung (nicht gezeigt) enthalten, mit der die angelegte Spannung während des Betriebs verändert wird, um eine bessere Abscheidung zu erreichen.

Die Spannungsquelle 120 kann neben einer Netzversorgung auch durch eine geeignete Batterieanordnung gespeist werden, so dass die Vorrichtung unabhängig von einer Netzversorgung wird. Es ist möglich, die Batterieanordnung und/oder die Steuerung der Abscheidemittel in einen Verschlussdeckel oder eine Abdeckplatte zu integrieren, an der auch der Formstumpf (oder ein anderer Formgeber) befestigt werden kann.

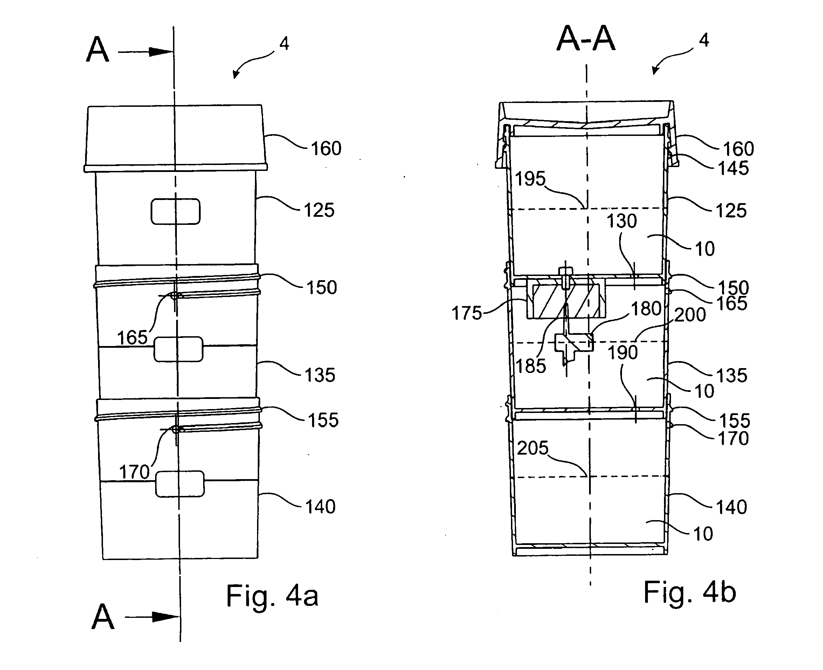

Die Figuren 4a und 4b zeigen eine schematische Seitenansicht und Querschnittsansicht einer vierten Ausführungsform der erfindungsgemäßen Vorrichtung 4. Die Vorrichtung 4 umfasst einen ersten Schlickerbehälter 135, einen zweiten Schlickerbehälter 140, der unterhalb des ersten Schlickerbehälters 135 angeordnet ist, und einen dritten Schlickerbehälter 125, der oberhalb des ersten Schlickerbehälters 135 angeordnet ist. Die Schlickerbehälter 125, 135, 140 weisen in ihren oberen Bereichen an der Außenseite jeweils ein Gewinde 145, 150, 155 auf, wobei der dritte Schlickerbehälter 125 mit einem Verschlussdeckel 160 versehen ist, der mittels des Gewindes 145 gehalten wird. Die Schlickerbehälter 125, 135, 140 weisen im wesentlichen gleiche Abmessungen auf, wobei sich der Außenbereich zum jeweiligen unteren Ende der Schlickerbehälter 125, 135, 140 geringfügig verjüngt. Dies erlaubt es, die Schlickerbehälter 125, 135, 140 ineinander zu stecken und so miteinander zu verbinden. Im jeweiligen oberen Bereich weisen die Schlickerbehälter 125, 135, 140 in ihrer Seitenwandung jeweils eine Entlüftungsbohrung 165, 170 auf.

Fig. 4b zeigt eine schematische Querschnittsansicht der in Fig. 4a gezeigten vierten Ausführungsform. Die Zeichnungsebene der Fig. 4b steht senkrecht zu der von Fig. 4a, wie durch den Schnitt A-A in Fig. 4a angedeutet. Im Inneren des ersten Schlickerbehälters 135 ist ein Knetmassebehälter 175 mit Knetmasse 185 angeordnet. In der hier dargestellten Ausführungsform ist der Knetmassebehälter 175 am Boden des dritten Schlickerbehälters 125 befestigt, der in den ersten Schlickerbehälter 135 eingesteckt ist. Der zu beschichtende Formstumpf 180 (als Beispiel eines Formgebers) wird in die Knetmasse 185 im Knetmassebehälter 175 gesteckt und somit fixiert. Es kann auch vorgesehen sein, den Knetmassebehälter am ersten Schlickerbehälter 135 selbst zu befestigen oder eine andere geeignete Maßnahme zu treffen, den Formstumpf 180 im ersten Schlickerbehälter 135 zu fixieren.

Der Boden des dritten Schlickerbehälters 125 weist eine Ablaufbohrung 130 als Leitungsmittel auf. Ebenso weist der Boden des ersten Schlickerbehälters 135 eine Ablaufbohrung 190 auf.

Im Betrieb wird die für eine Beschichtung des Formstumpfes 180 notwendige Menge Keramikschlicker 10 zunächst in den dritten Schlickerbehälter 125 gegeben, dessen Verschlussdeckel 160 hierzu entfernt wird. Der zunächst erreichte Füllstand des dritten Schlickerbehälters 125 wird durch den Flüssigkeitsspiegel 195 angedeutet.

Die Ablaufbohrung 130 ist geöffnet, und der Keramikschlicker 10 wird auf diese Weise aus dem dritten Schlickerbehälter 125 in den ersten Schlickerbehälter 135 mit kontrollierte Geschwindigkeit eingeleitet. Die dabei aus dem ersten Schlickerbehälter 135 verdrängte Luft tritt durch die Entlüftungsbohrung 165 aus.

Die Ablaufbohrung 190 des ersten Schlickerbehälters 135 ist zwar geöffnet, doch wird das Fingerventil 170 des zweiten Schlickerbehälters 140 geschlossen gehalten, so dass kein Keramikschlicker in diesen eindringt, da kein Druckausgleich stattfinden kann. Es stellt sich ein Füllstand des ersten Schlickerbehälters 135 ein, wie er durch Flüssigkeitsspiegel 200 dargestellt ist. Während des Füllens wird der Formstumpf 180 in das Keramikschlickerbad im ersten Schlickerbehälter 135 eingebracht, wobei sich die Einbringgeschwindigkeit aus dem Zulauf von Keramikschlicker ergibt, der durch eine entsprechend kontrollierte Öffnung der Ablaufbohrung eingestellt werden kann. Daraufhin bildet sich auf dem Formstumpf 180 die gewünschte Beschichtung aus, wobei die Bildung der Beschichtung durch geeignete Maßnahmen unterstützt werden kann, beispielsweise lokale Destabilisierung des Keramikschlickers 10, Flüssigkeitsentzug durch die Porosität des Formstumpfes und/oder Elektrophorese. Der Formstumpf verbleibt also für eine vorbestimmte Zeit oder zumindest bis zur Ausbildung einer gewünschten Schichtdicke im Keramikschlickerbad.

Nach Ablauf der zur Beschichtung vorgesehenen Zeit wird das Fingerventil 170 geöffnet, so dass der Keramikschlicker 10 durch die Ablaufbohrung aus dem ersten in den zweiten Schlickerbehälter 140 kontrolliert abgeleitet wird. Dabei fällt der Flüssigkeitsspiegel im ersten Schlickerbehälter 135 und der beschichtete Formstumpf 180 wird kontrolliert aus dem Keramikschlickerbad entfernt. Zum Ende des Vorgangs stellt sich der mit Flüssigkeitsspiegel 205 angedeutete Füllstand im zweiten Schlickerbehälter 140 ein, wobei der erste und dritte Schlickerbehälter 125, 135 von Keramikschlicker entleert sind.

Die Schlickerbehälter können mit Rührmitteln versehen sein, um eine ungewollte Trennung von Keramikmaterial und Aufschlämmmittel zu vermeiden. Da die Schlickerbehälter einfach ineinander gesteckt werden (können), lassen sie sich auch einfach wieder trennen, etwa zu Reinigungszwecken. Zudem können alle drei Schlickerbehälter im wesentlichen baugleich oder bauähnlich ausgeführt werden, was die Produktion vereinfacht.

Erfindungsgemäß wird der Schlickerbehälter von Keramikschlicker kontrolliert entleert, so dass der Schlickerspiegel eines Keramikschlickerbades zur Beschichtung eines Formstumpfes (oder eines anderen Formgebers) mit Keramikmaterial in gewünschter Weise absinkt, wobei der Formstumpf mit anhaftendem Keramikmaterial aus dem Keramikschlickerbad heraustritt, ohne dass eine Bewegung des Formstumpfes relativ zum Schlickerbehälter auftritt. Das Ableiten des Keramikschlickers ist einfacher zu steuern als eine relative Bewegung von Formstumpf und Schlickerbehälter, so dass bessere Abscheidungsergebnisse erreicht werden können.

## Patentansprüche

1. Vorrichtung (1, 2, 3) zur Herstellung von Keramikgrünkörpern für dentale Formteile, mit einem ersten, Keramikschlicker (10) enthaltenden Schlickerbehälter (5, 35, 75, 135), wobei ein Formgeber (15) in den Keramikschlicker (10) einbringbar ist,
**dadurch gekennzeichnet, dass** am ersten Schlickerbehälter (5, 35, 75, 135) Leitungsmittel (20, 45, 85, 95, 190) so angeordnet sind, dass durch sie Keramikschlicker (10) kontrolliert aus dem ersten Schlickerbehälter (5, 35, 75, 135) ableitbar ist.

2. Vorrichtung (3) zur Herstellung von Keramikgrünkörpern für dentale Formteile, mit einem ersten, gegebenenfalls Keramikschlicker (10) enthaltenden Schlickerbehälter (75), wobei ein Formgeber (15) in den Keramikschlicker (10) einbringbar ist, und mit Abscheidemitteln (105) für eine elektrophoretische Abscheidung von Keramikschlicker (10) auf dem zu beschichtenden Formgeber (15),
**dadurch gekennzeichnet, dass** am ersten Schlickerbehälter (75) Leitungsmittel (85, 95) so angeordnet sind, dass durch sie Keramikschlicker (10) kontrolliert aus dem ersten Schlickerbehälter (75) ableitbar ist.

3. Vorrichtung (1, 2, 3) nach einem der vorangehenden Ansprüche,
wobei die Leitungsmittel (20, 45, 85, 190) als eine Ablassöffnung (20, 45, 85, 130) zum Ableiten von Keramikschlicker (10) im unteren Bereich des ersten Schlickerbehälters (5, 35, 75) ausgestaltet sind oder eine solche Ablassöffnung (20, 45, 85) umfassen.

4. Vorrichtung (1, 2, 3) nach Anspruch 3,
wobei ein mechanischer Schieber und/oder ein Quetschventil vorgesehen ist, mit dem die Ablassöffnung (20, 45, 85) des ersten Schlickerbehälters (5, 35, 75) zum kontrollierten Ablassen von Keramikschicker (10) aus dem ersten Schlickerbehälter (5, 35, 75) verschließbar ist.

5. Vorrichtung (2, 3) nach einem der vorangehenden Ansprüche,
mit einem zweiten Schlickerbehälter (40, 80), in den Keramikschlicker (10) durch die Leitungsmittel (45, 85, 95) aus dem ersten Schlickerbehälter (35, 75) kontrolliert einleitbar ist.

6. Vorrichtung (2, 3) nach Anspruch 5,
wobei die Innenräume des ersten und des zweiten Schlickerbehälters (35, 75, 40, 80) durch die Ablassöffnung (45, 85) miteinander verbunden und durch Mittel zum Schließen der Ablassöffnung (45, 85) voneinander trennbar sind.

7. Vorrichtung (2, 3) nach Anspruch 5 oder 6,
wobei eine oder mehrere Öffnungen an einer von der Ablassöffnung (45, 85) entfernten Stelle in dem ersten und/oder dem zweiten Schlickerbehälter (35, 75, 40, 80) vorgesehen sind, sowie Verschlussdeckel (55, 60), um die Öffnung(en) lösbar dicht zu verschließen.

8. Vorrichtung (2, 3) nach einem der Ansprüche 5 bis 7,
wobei die Leitungsmittel (45, 85, 95) zusätzliche Einleitungsmittel (95) umfassen, durch die Keramikschlicker (10) aus dem zweiten (40, 80) in den ersten (35, 75) Schlickerbehälter einleitbar ist.

9. Vorrichtung (2, 3) nach einem der Ansprüche 5 bis 8,
wobei der erste und zweite Schlickerbehälter (35, 75, 40, 80) im wesentlichen baugleich ausgestaltet sind und durch eine Drehung um eine horizontale Achse ihre Position tauschen können.

10. Vorrichtung (2, 3) nach einem der Ansprüche 5 bis 9,
wobei der zweite Schlickerbehälter (40, 80) und/oder der Verschlussdeckel (60) des zweiten Schlickerbehälters (40) ein Rührmittel (70) zum Rühren von Keramikschlicker (10) aufweisen.

11. Vorrichtung (1, 2, 3) nach einem der vorangehenden Ansprüche,
wobei der erste Schlickerbehälter (5, 35, 75) und/oder der Verschlussdeckel (55) des ersten Schlickerbehälters (35) Befestigungsmittel (65, 90) zur lösbaren Befestigung des Formgebers (15) aufweisen.

12. Vorrichtung (1, 2, 3) nach einem der vorangehenden Ansprüche,
wobei der Innenraum des ersten Schlickerbehälters (5, 35, 75) sich zur Ablassöffnung (20, 45, 85) hin verjüngt.

13. Vorrichtung (4) nach einem der vorangehenden Ansprüche,
mit einem dritten Schlickerbehälter (125), wobei am dritten Schlickerbehälter (125) Leitungsmittel (130) so angeordnet sind, dass durch sie Keramikschlicker (10) kontrolliert aus dem dritten Schlickerbehälter (125) in den ersten Schlickerbehälter (135) einleitbar ist.

14. Verfahren zum Herstellen von Keramikgrünkörpern für dentale Formteile mit folgenden Schritten:
- Einlassen eines Keramikschlickerbades in einen ersten Schlickerbehälter (5, 35, 75, 135) einer Vorrichtung (1, 2, 3, 4) nach einem der Ansprüche 1 bis 13,
- Eintauchen eines Formgeberss (15) in das Keramikschlickerbad im ersten Schlickerbehälter (5, 35, 75, 135),
- Beschichten des Formgebers (15) mit Keramikschlicker (10) im Keramikschlickerbad, so dass ein Keramikgrünkörper (30) entsteht, und
- Entfernen des Formgebers (15) mit dem Keramikgrünkörper (30) aus dem Keramikschlickerbad,
wobei Keramikschlicker (10) zur Entfernung des Formgebers (15) aus dem Keramikschlickerbad kontrolliert aus dem ersten Schlickerbehälter (5, 35, 75) abgeleitet wird.

15. Verfahren nach Anspruch 14,
wobei das Beschichten erfolgt durch (i) elektrophoretische Abscheidung, (ii) Destabilisierung von Keramikschlicker (10), und/oder (iii) Entziehung der Flüssigphase aus dem Keramikschlicker (10) aufgrund einer Porosität des Formgebers (15).

16. Verfahren nach Anspruch 15,
wobei der Formgeber (15) zur Destabilisierung des Keramikschlickers (10) vor dem Eintauchen in das Keramikschlickerbad mit einem Elektrolyten beschichtet wird.

17. Verfahren nach einem der Ansprüche 14-16, wobei der Formgeber ein Formstumpf eines Arbeitsmodells ist.

18. Verfahren zur Herstellung eines dentalen Formteils, insbesondere eines Inlays, einer Krone, einer Brücke oder eines Implantatgerüsts, mit den Schritten:
- Herstellen eines Formgebers (15),
- Herstellen eines Keramikgrünkörpers (30) auf dem Formgeber (15) gemäß einem Verfahren nach einem der Ansprüche 14 - 16,
- Herstellen des dentalen Formteils aus dem Keramikgrünkörper (30).
